# EUROPEAN PATENT APPLICATION

(11) **EP 1 928 178 A1**
(43) Date of publication of application: **04.06.2008**
(21) Application number: 06077138.3
(22) Date of filing: 30.11.2006
(51) Int. Cl.: H04N 7/18, H04N 5/232

(54) **Automatic monitoring a game object or game participant**

(71) Applicant: Nederlandse Organisatie voor Toegepast-Natuurwetenschappelijk Onderzoek TNO, 2628 VK Delft (NL)
(72) Inventor: Kleijweg, Johannes Cornelis Maria, 2498 - ZC / Den Haag (NL)
(74) Representative: van Loon, C.J.J.

(57) **Abstract**

Method and system for monitoring, by means of one or more video cameras (1), a game object (2a) or game participant (2b, 2c) during e.g. a football match. The system comprises a game object or game participant with radar responsive means, e.g. a radar transponder (3a, 3b, 3c). Radar means (4) are provided which are arranged to monitor the radar responsive means and to calculate dynamically the position of the game object or game participant or both to be monitored. Control means (5) are provided which are arranged to control (6) the video cameras to follow and record the game object or game participant or both.

## Description

### Field and background of the invention

Method for monitoring, by means of one or more video cameras, a game object or game participant.

The location of a game object, e.g. the football in a football match, or a game participant, e.g. a football player, nowadays may be followed by one or more manually operated video cameras.

### Summary of the invention

One aim of the present invention is to provide a method and means for automatic monitoring, by one or more video cameras, a game object or game participant.

The method preferrably comprises next steps:
- provide the game object or game participant or both with radar responsive means;
- provide radar means which are arranged to monitor the radar responsive means and to calculate dynamically (or to trace) the position of the game object or game participant or both to be monitored (or traced);
- provide control means which are arranged to control said one or more video cameras to follow and record the game object or game participant or both.

A system for performing such a method as preferred by the present invention preferably comprises at least one game object or game participant - e.g. the game participant's clothes - or both with radar responsive means, and radar means which are arranged to monitor the radar responsive means and to calculate dynamically the position of the game object or game participant or both to be monitored, and control means which are arranged to control said one or more video cameras to follow and record the game object or game participant or both.

The radar responsive means preferrably may comprise a radar transponder, i.e. and electrical device which is designed to receive a radar signal and automatically transmits a specific reply signal, e.g. an identification code for the game object, for each individual participant, to the radar means, to calculate the exact position of the (each) transponder.

### Exemplary Embodiment

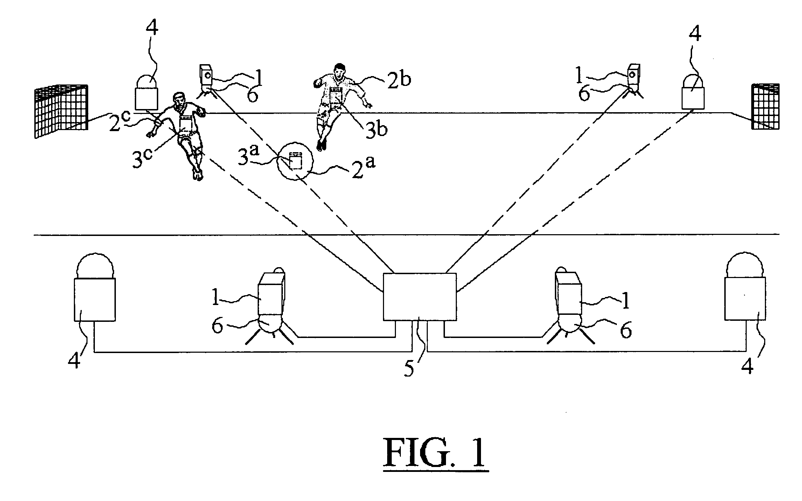

Figure 1 shows an exemplary embodiment of a system which is arranged to perform the method as presented in short in the preceding.

The system shown in figure 1 is arranged for monitoring (tracing, tracking), by means of a number of video cameras 1, a game object 2a and game participants 2b and 2c. In this exemplary embodiment, the system comprises one game object, a football, and 22 game participants, two of which are drawn in figure 1. The football and (some of) the participants (players) are provided with radar responsive means. One goal for monitoring or tracing individual players may be to register and evaluate the (e.g. professionally paid) individual player's personal performance.

The radar responsive means may be formed by a state-of-the-art small and leight radar transponder. A transponder 3a is mounted inside the football 2. The participants 2b and 2c may be provided with clothing, e.g. shirts, which include radar transponders 3b and 3c. In the practice of a football game e.g. all 22 participants may be followed individual by means of (22) individual radar transponders. All transponders are arranged to reflect an individual, unique identification code, which enables the radar means to calculate the position of each individual transponder and thus the position of the ball and the individual participants.

The radar means may comprise a number of FMCW (Frequency-Modulated Continuous Wave) radar transceivers 4 which are arranged to monitor the radar transponders 3a, 3b and 3c and to calculate dynamically (or to trace or track) the positions of the football 2a and participants 2b and 2c to be monitored (traced). Output signals from the radar transceivers 4 are fed to control means 5 which are arranged to control the various video cameras 1 to follow and record the game object 2a and game participants 2b and 2c. To that end control signals are fed to the cameras 1 - each of them having a camera controller 6 - to direct and to focus the camera to the football 2a and participants 2b and 2c in each position they may have during the football match. It will be clear that to trace the football and the (e.g. all) participants a great number of cameras 1 may be needed.

## Claims

1. Method for monitoring, by means of one or more video cameras, a game object or game participant or both, the method comprising next steps:
- provide the game object or game participant or both with radar responsive means;
- provide radar means which are arranged to monitor the radar responsive means and to calculate dynamically the position of the game object or game participant or both to be monitored;
- provide control means which are arranged to control said one or more video cameras to follow and record the game object or game participant or both.

2. System for monitoring, by means of one or more video cameras (1), a game object (2a) or game participant (2b, 2c) or both, the system comprising at least one game object or game participant or both including radar responsive means (3a, 3b, 3c), and radar means (4) which are arranged to monitor the radar responsive means and to calculate dynamically the position of the game object or game participant or both to be monitored, and control means (5) which are arranged to control (6) said one or more video cameras to follow and record the game object or game participant or both.

3. System according to claim 2, the radar responsive means comprising a radar transponder.

4. Football, arranged for use in the system according to claim 2, comprising radar responsive means (3a).

5. Clothing for a game participant, arranged for use in the system according to claim 2, comprising radar responsive means (3b, 3c).
